# EUROPEAN PATENT APPLICATION

(11) **EP 4 167 096 A1**
(43) Date of publication of application: **19.04.2023**
(21) Application number: 21928339.7
(22) Date of filing: 30.12.2021
(51) Int. Cl.: G06F 11/36

(54) **TASK ALLOCATION METHOD AND APPARATUS, ELECTRONIC DEVICE, AND COMPUTER READABLE MEDIUM**

(30) Priority: 17.06.2021 CN 202110672212
(71) Applicant: BEIJING BAIDU NETCOM SCIENCE TECHNOLOGY CO., LTD., Beijing 100085 (CN)
(72) Inventor: LIU, Huali, Beijing 100085 (CN); HUANG, Qi, Beijing 100085 (CN); ZHANG, Pei, Beijing 100085 (CN); SHEN, Huiling, Beijing 100085 (CN)
(74) Representative: Richly & Ritschel Patentanwälte PartG mbB
(86) International application number: PCT/CN2021/143052
(87) International publication number: WO 2022/262253

(57) **Abstract**

The present disclosure provides a method and apparatus for assigning a task, and relates to the fields of online testing, cloud computing and other technologies. A specific implementation includes: generating a testing task list based on a received testing task request, the testing task list including at least one testing task; acquiring a currently assigned task of at least one terminal; and adopting, in response to calculating load information of the currently assigned task executed by all terminals, a different task assignment rule based on the load information to assign a testing task in the testing task list to each terminal, the load information including an estimated time consumption and an amount of generated data of the currently assigned task executed by the respective terminals. This implementation improves the efficiency of the terminal in assigning a task.

## Description

This patent application claims the priority from Chinese Patent Application No. 202110672212.4, filed on June 17, 2021 and entitled "Method and Apparatus for Assigning Task, Electronic Device and Computer readable medium," the entire disclosure of which is hereby incorporated by reference.

### TECHNICAL FIELD

The present disclosure relates to the field of task assignment technology, specifically to the fields of online testing, cloud computing and other technologies, and particularly to a method and apparatus for assigning a task, an electronic device, a computer readable medium and a computer program product.

### BACKGROUND

Now there is a huge number of mobile phone user groups in China, and abundant applications have become a must-have for mobile phone users. An application that can be selected for use by the users for a long time must have good functions. Therefore, there is a need for a lot of testing work before a mobile phone product is launched.

The number of testing tasks for testing mobile phones may often reach hundreds or thousands. If the testing is manually performed, it will result in high costs and a low efficiency, and the purpose of evenly assigning the testing tasks to each mobile phone cannot be achieved.

### SUMMARY

A method and apparatus for assigning a task, an electronic device, a computer readable medium and a computer program product are provided.

According to a first aspect, a method for assigning a task is provided. The method includes: generating a testing task list based on a received testing task request, the testing task list comprising at least one testing task; acquiring a currently assigned task of at least one terminal; and adopting, in response to calculating load information of the currently assigned task executed by all terminals, a different task assignment rule based on the load information to assign a testing task in the testing task list to each terminal, the load information comprising an estimated time consumption and an amount of generated data of the currently assigned task executed by respective terminals.

According to a second aspect, an apparatus for assigning a task is provided. The apparatus includes: a generating unit, configured to generate a testing task list based on a received testing task request, the testing task list comprising at least one testing task; an acquiring unit, configured to acquire a currently assigned task of at least one terminal; and an executing unit, configured to adopt, in response to calculating load information of the currently assigned task executed by all terminals, a different task assignment rule based on the load information to assign a testing task in the testing task list to each terminal, the load information comprising an estimated time consumption and an amount of generated data of the currently assigned task executed by respective terminals.

According to a third aspect, an electronic device is provided. The electronic device includes at least one processor; and a memory communicatively connected to the at least one processor. The memory stores instructions executable by the at least one processor, and the instructions are executed by the at least one processor, to enable the at least one processor to perform the method according to any implementation in the first aspect.

According to a fourth aspect, a non-transitory computer readable storage medium is provided. The non-transitory computer readable storage medium stores a computer instruction. The computer instruction is used to cause a computer to perform the method according to any implementation in the first aspect.

According to a fifth aspect, a computer program product is provided. The computer program product includes a computer program. The computer program, when executed by a processor, implements the method according to any implementation in the first aspect.

According to the method and apparatus for assigning a task that are provided in the embodiments of the present disclosure, first, the testing task list is generated based on the received testing task request, the testing task list including the at least one testing task. Then, the currently assigned task of the at least one terminal is acquired. Finally, in response to calculating the load information of the currently assigned task executed by all the terminals, a different task assignment rule is adopted based on the load information to assign a testing task in the testing task list to the each terminal. Accordingly, when the load information of the currently assigned task executed by all the terminals can be calculated, a testing task is assigned to each terminal based on the different task assignment rule, which ensures the balance of load when the respective terminals in all the terminals execute the testing task, and improves the efficiency of the task assignment as compared with the manual assignment of the testing task.

It should be understood that the content described in this part is not intended to identify key or important features of the embodiments of the present disclosure, and is not used to limit the scope of the present disclosure. Other features of the present disclosure will be easily understood through the following description.

### BRIEF DESCRIPTION OF THE DRAWINGS

The accompanying drawings are used for a better understanding of the scheme, and do not constitute a limitation to the present disclosure.
Fig. 1 is a flowchart of a method for assigning a task according to an embodiment of the present disclosure;
Fig. 2 is a flowchart of the method for assigning a task according to another embodiment of the present disclosure;
Fig. 3 is a schematic structural diagram of an apparatus for assigning a task according to an embodiment of the present disclosure; and
Fig. 4 is a block diagram of an electronic device used to implement the method for assigning a task according to embodiments of the present disclosure.

### DETAILED DESCRIPTION OF EMBODIMENTS

Example embodiments of the present disclosure are described below in combination with the accompanying drawings, and various details of the embodiments of the present disclosure are included in the description to facilitate understanding, and should be considered as examples only. Accordingly, it should be recognized by one of ordinary skill in the art that various changes and modifications may be made to the embodiments described herein without departing from the scope and spirit of the present disclosure. Also, for clarity and conciseness, descriptions for well-known functions and structures are omitted in the following description.

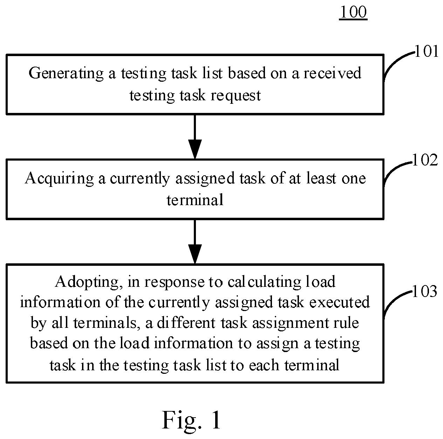

Fig. 1 illustrates a flow 100 of a method for assigning a task according to an embodiment of the present disclosure, the above method for assigning a task including the following steps.

Step 101, generating a testing task list based on a received testing task request.

In this embodiment, an electronic device on which the method for assigning a task runs may receive, by means of a wired connection or a wireless connection, a task request sent by a server. This task request may be, for example, a request to test the display resolution of a terminal, or a request to acquire the screen refresh rate of the terminal. Here, the above task request may refer to one request or a plurality of requests. After receiving the task request, the above electronic device generates the testing task list based on the task request. After the above electronic device sends a testing task to the terminal, the terminal executes the testing task and feeds back the result of executing the testing task to the above electronic device.

In this embodiment, the testing task in the generated testing task list refers to a task that is not yet assigned to any terminal based on the testing task request. The above electronic device combines all testing tasks to assign the tasks to the existing online terminal(s).

Step 102, acquiring a currently assigned task of at least one terminal.

In this embodiment, a terminal is also referred to as a terminal device, which is a device in a computer network that is located at the outermost periphery of the network, and the terminal device is mainly used for the input of user information, the output of a processing result, and the like.

In this embodiment, the terminal device may be a mobile terminal, a device terminal, or the like. The terminal may alternatively be a mobile terminal combined with a cloud computing technology, for example, a cloud phone. The cloud phone is a mobile phone which applies the cloud computing technology to a network terminal service and of which the cloud service is implemented by a cloud server. The cloud phone is a smartphone deeply integrated with a network service, and such a mobile phone can realize numerous functions through a network by virtue of the system contained by itself and the network terminal built by the manufacturer.

The cloud phone makes full use of the mobile broadband network, the online features of the mobile phone and the characteristics of the cloud technology, to connect the mobile phone with the entire network system.

In this embodiment, the at least one terminal refers to an online terminal in the current network, and the respective terminals are executing the currently assigned task or have completed all currently assigned tasks. The above electronic device calculates the task load of each terminal according to the currently assigned tasks of all the terminals, thereby ascertaining whether to assign a testing task to a terminal.

In this embodiment, the currently assigned task of each terminal may be a testing task or an other task that the other terminal needs to execute, which is not limited in the present disclosure.

Step 103, adopting, in response to calculating load information of the currently assigned task executed by all terminals, a different task assignment rule based on the load information to assign a testing task in the testing task list to each terminal.

Here, the load information includes an estimated time consumption and an amount of generated data of the currently assigned task executed by the respective terminals.

In this embodiment, all the terminals are a general term for all of the at least one terminal, that is, all the terminals are also equal to the at least one terminal.

In this embodiment, there are two situations where the load information of the currently assigned task executed by the terminal can be calculated and cannot be calculated. Whether the load information of the currently assigned task executed by the terminal can be calculated is ascertained according to whether the currently assigned task executed by the terminal has historical running data.

When the currently assigned task is assigned to the terminal for the first time, and the assigned task has no any historical running data, it is unable to estimate or calculate the time consumption and the amount of generated data of the currently assigned task executed by each terminal.

When the currently assigned task has historical running data, even if the execution for the currently assigned task has not been completed, the historical time consumption and historical amount of data of the currently assigned task can be ascertained through the historical running data, and the load information of the currently assigned task is estimated by estimating the average values of all historical time consumptions and all historical amounts of data.

In this embodiment, the task assignment rule may be at least two assignment rules, and each two task assignment rules are different. The at least two task assignment rules may include: an equal task assignment rule, and a real-time task assignment rule.

In this embodiment, the real-time task assignment rule includes: assigning a testing task in the testing task list to each terminal in real time. According to the real-time task assignment rule, when a plurality of terminals in all the terminals are in an idle state, the testing tasks in the testing task list may be assigned to the plurality of terminals in sequence in real time.

In this embodiment, the equal task assignment rule includes: calculating a task quantity of the testing tasks in the testing task list and a terminal quantity of all the terminals; assigning, when the task quantity is greater than the terminal quantity and a remainder of the task quantity and the terminal quantity is not zero, M testing tasks in the testing task list to each terminal in preceding terminals of a value of the remainder in all the terminals, and assigning N testing tasks in the testing task list to each terminal except the preceding terminals of the value of the remainder in all the terminals, wherein M is a number obtained by adding 1 to a quotient of the task quantity and the terminal quantity, and N is the quotient of the task quantity and the terminal quantity; and assigning, when the task quantity is less than or equal to the terminal quantity, one testing task in the testing task list to each terminal in preceding terminals of the task quantity in all the terminals.

In this embodiment, adopting a different task assignment rule based on the load information to assign a testing task in the testing task list to each terminal may include: adopting, when an estimated time consumption of the currently assigned task executed by each terminal in all the terminals is greater than a set time or an amount of generated data is greater than a set amount of data, the real-time task assignment rule to assign the testing task in the testing task list to each terminal; and adopting, when the estimated time consumption of the currently assigned task executed by each terminal in all the terminals is less than or equal to the set time or the amount of the generated data is less than or equal to the set amount of data, the equal task assignment rule to assign the testing task in the testing task list to each terminal. In this embodiment, the set time or the set amount of data is a time or an amount calculated according to the information, such as a type, of an assigned task.

Alternatively, adopting the different task assignment rules based on the load information to assign the testing task in the testing task list to each termina may further include: adopting, when an estimated time consumption of the currently assigned task executed by a part of terminals in all the terminals is greater than the set time, the real-time task assignment rule to assign a part of testing tasks in the testing task list to the part of terminals; and adopting the equal task assignment rule to assign a testing task except the part of testing tasks in the testing task list to a terminal except the part of terminals in all the terminals.

In this embodiment, when all the terminals have finished the running of all the testing tasks in the testing task list, the respective terminals output their respective testing results after the execution of the testing tasks to the electronic device to generate a testing report, thus ending the entire testing process.

According to the method for assigning a task provided in the embodiment of the present disclosure, first, the testing task list is generated based on the received testing task request, the testing task list including at least one testing task. Then, the currently assigned task of the at least one terminal is acquired. Finally, in response to calculating the load information of the currently assigned task executed by all the terminals, a different task assignment rule is adopted based on the load information to assign a testing task in the testing task list to each terminal. Accordingly, when the load information of the currently assigned task executed by all the terminals can be calculated, a testing task is assigned to the each terminal based on the different task assignment rule, which ensures the balance of load when the respective terminals in all the terminals execute the testing task, and improves the efficiency of the task assignment as compared with the manual assignment of the testing task.

In some alternative implementations of this embodiment, in response to being unable to calculate the load information of the currently assigned task executed by all the terminals and the testing task in the testing task list being greater than a preset quantity, a testing task in the testing task list is assigned to each terminal in real time.

In the alternative implementations, based on the type of the assigned task, the operation step in the currently assigned task of the terminal may need the participation of an operating staff. However, the operation time and reaction time of the operating staff vary from person to person. When the operating staff is not operating, the load information of the assigned task cannot be estimated. Further, whether the load information of the currently assigned task executed by the terminal can be estimated is further based on whether the currently assigned task has historical running data. When the currently assigned task has no any historical running data, it is required to assign the testing task to the each terminal in real time, that is, the real-time task assignment rule is executed.

In the alternative implementations, when the load information of the currently assigned task executed by all the terminals cannot be calculated, the efficiency of each terminal in obtaining the testing task is improved by assigning the testing task to the each terminal in real time.

In some alternative implementations of this embodiment, adopting a different task assignment rule based on the load information to assign a testing task in the testing task list to each terminal includes: ascertaining a light-load terminal and a heavy-load terminal in the at least one terminal based on the load information; and adopting, based on proportions of the light-load terminal and the heavy-load terminal in all the terminals, a different task assignment rule to assign a testing task in the testing task list to each terminal.

In this embodiment, the light-load terminal refers to a terminal of which the currently assigned task has a time consumption less than or equal to a time threshold in the at least one terminal. The heavy-load terminal refers to a terminal of which the currently assigned task has a time consumption is greater than the time threshold in the at least one terminal. Here, the time threshold may be an average value of historical execution time consumptions of the assigned task.

In this embodiment, the proportions of the light-load terminal and the heavy-load terminal in all the terminals refer to the respective contents of the light-load terminal and the heavy-load terminal in the at least one terminal. For example, if the at least one terminal all refer to a light-load terminal, the light-load terminal makes up 100% of all the terminals. If the at least one terminal all refer to a heavy-load terminal, the heavy-load terminal makes up 100% of all the terminals.

Alternatively, the adopting, based on proportions of the light-load terminal and the heavy-load terminal in all the terminals, the different task assignment rules to assign the testing task in the testing task list to each terminal may include: adopting, when each terminal in all the terminals is a heavy-load terminal, the real-time task assignment rule to assign the testing task in the testing task list to each terminal; and adopting, when each terminal in all the terminals is a light-load terminal, the equal task assignment rule to assign the testing task in the testing task list to each terminal.

In the alternative implementations, all the terminals are divided into a light-load terminal and a heavy-load terminal. Based on the proportions of the light-load terminal and the heavy-load terminal in all the terminals, the different task assignment rules are adopted to assign the testing task, thereby ensuring the balance of the tasks of the light-load terminal and the heavy-load terminal.

In some alternative implementations of this embodiment, the adopting, based on proportions of the light-load terminal and the heavy-load terminal in all the terminals, a different task assignment rule to assign the testing task in the testing task list to each terminal includes: assigning, in response to the at least one terminal including a light-load terminal and a heavy-load terminal, a part of testing tasks in the test task list to the light-load terminal in sequence until load information of the light-load terminal is identical to load information of the heavy-load terminal; and assigning, in response to ascertaining that there is a remaining testing task in the testing task list, the remaining testing task to all the terminals in real time.

In the alternative implementations, according to the existing load information of the light-load terminal, the testing tasks of which the task amount reaches a task amount equivalent to the average time consumption of the heavy-load terminal are assigned in sequence. When this round of execution for the assigned tasks is completed, more terminals are released, and the remaining testing task in the testing list is assigned to all the terminals by adopting the real-time task assignment rule.

Alternatively, when it is detected that there is no remaining testing task in the testing task list, it is no longer required to assign any testing task to any terminal.

In the alternative implementations of this embodiment, when there is a light-load terminal and a heavy-load terminal in all the terminals, a testing task is first assigned to the light-load terminal, such that the light-load terminal and the heavy-load terminal are equivalent in load, which ensures that the on-line terminals can have the same amount of load, thereby ensuring that all the resources in the terminal are fully utilized as much as possible.

In some alternative implementations of this embodiment, the adopting, based on proportions of the light-load terminal and the heavy-load terminal in all the terminals, a different task assignment rule to assign a testing task in the testing task list to each terminal includes: calculating, in response to ascertaining that all the terminals are light-load terminals, a task quantity of the testing tasks in the testing task list and a terminal quantity of all the terminals; and assigning, in response to the task quantity being greater than the terminal quantity and a remainder of the task quantity and the terminal quantity being not zero, M testing tasks in the testing task list to each terminal in preceding terminals of a value of the remainder in all the terminals, and assigning N testing tasks in the testing task list to each terminal except the preceding terminals of the value of the remainder in all the terminals, wherein M is a number obtained by adding 1 to a quotient of the task quantity and the terminal quantity, and N is the quotient of the task quantity and the terminal quantity.

The task assignment rule adopted in the alternative implementations is the equal task assignment rule. When all the terminals are the light-load terminals, the proportion of the heavy-load terminal in all the terminals is zero.

In this embodiment, each terminal in the at least one terminal may execute a testing task in the testing task list. For example, a current first testing task is sent to a first terminal for running, and a first testing task in another testing task list may be sent to a second terminal for execution. Here, both the first terminal and the second terminal are terminals in the at least one terminal.

In an example, an electronic device assigns M testing tasks to N cloud phones (the N cloud phones all being light-load terminals). When M>N, if A=M%N, then the preceding A cloud phone devices have M/N+1 testing tasks and the other cloud phone devices have M/N testing tasks. For example, if M is 100 and N is 8, then A is 4, and M/N=12. That is, 4 cloud phones in the 8 cloud phones are assigned 12+1 testing tasks, and the other 4 cloud phones are assigned 12 testing tasks.

In the alternative implementations, when all the terminals are the light-load terminals, the above task assignment rule is adopted to assign the testing task to each terminal. The assignment is relatively direct, saving the time taken to assign the task.

In some alternative implementations of this embodiment, the adopting, based on proportions of the light-load terminal and the heavy-load terminal in all the terminals, a different task assignment rule to assign a testing task in the testing task list to each terminal further includes: assigning, in response to the task quantity being less than or equal to the terminal quantity, one testing task in the testing task list to each terminal in preceding terminals of the task quantity in all the terminals.

In the alternative implementations, the electronic device assigns M testing tasks to N cloud phones (the N cloud phones all being light-load terminals). When M≤ N, each device in the preceding M devices is assigned one testing task. The above assignment rule also belongs to the equal task assignment rule. When all the terminals are the light-load terminals, the equal task assignment rule is adopted to assign a testing task. This assignment is relatively direct. However, since the time for each testing task may be not fixed or not all the same, the efficiency may not be optimal.

In the alternative implementations, a direct assignment rule is adopted based on the task quantity and the terminal quantity to assign a testing task to each terminal, which ensures the effectiveness in implementing the testing task.

In some alternative implementations of this embodiment, the adopting, based on proportions of the light-load terminal and the heavy-load terminal in all the terminals, a different task assignment rule to assign a testing task in the testing task list to each terminal includes: assigning, in response to ascertaining that all the terminals are heavy-load terminals, a testing task in the testing task list to each terminal in real time.

The task assignment rule adopted in the alternative implementations is the real-time task assignment rule. When all the terminals are the heavy-load terminals, the proportion of the light-load terminal in all the terminals is zero.

In the alternative implementations, the rule adopted to assign the testing task in the testing task list to each terminal in real time is the real-time task assignment rule. The real-time task assignment rule refers to that, a first round of task assignment is performed first, in which each terminal is assigned one testing task; and each time one terminal completes the execution on the testing task (the testing task is run by communicating the electronic device with the terminal, this running process is blocked, and the terminal returns a running result to the electronic device after finishing the running of the testing task, and thus, it can be ascertained whether the terminal completes the execution), if there is still a to-be-run testing task in the testing task list at this point, one testing task is assigned to the terminal completing the task until all the testing tasks in the testing task list are all assigned.

In the alternative implementations, when all the terminals are the heavy-load terminals, the testing task is assigned to each terminal in real time, which can improve the efficiency of the each terminal in running the testing task.

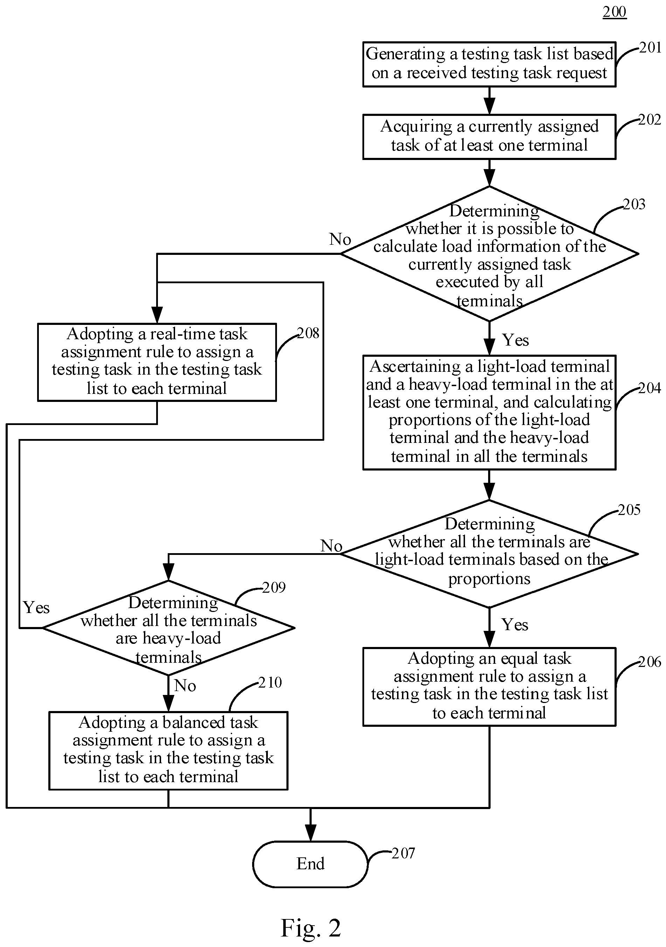

Fig. 2 is a flowchart of the method for assigning a task according to another embodiment of the present disclosure, the method for assigning a task including the following steps.

Step 201, generating a testing task list based on a received testing task request, and then, performing step 202.

Step 202, acquiring a currently assigned task of at least one terminal, and then, performing step 203.

It should be understood that the above operations and features in steps 201-202 correspond to the operations and features in steps 101-102, respectively. Therefore, the above descriptions for the operations and features in steps 101-102 are also applicable to steps 201-202, and thus will not be repeatedly described here.

Step 203, determining whether it is possible to calculate load information of the currently assigned task executed by all terminals; performing step 204 if it is possible to calculate the load information of the currently assigned task executed by all the terminals; otherwise, performing step 208.

In this embodiment, by acquiring the historical data of the currently assigned task executed by each terminal, whether it is possible to calculate the load information can be ascertained based on the presence or absence of the historical data. Specifically, when there is no historical data of the currently assigned task executed by the terminal, it is ascertained that the load information of the currently assigned task executed by the terminal cannot be calculated. When there is the historical data of the currently assigned task executed by the terminal, it is ascertained that the load information of the currently assigned task executed by the terminal can be calculated.

Step 204, ascertaining a light-load terminal and a heavy-load terminal in the at least one terminal, calculating proportions of the light-load terminal and the heavy-load terminal in all the terminals, and then performing step 205.

In this embodiment, the at least one terminal may all refer to the light-load terminal, or all refer to the heavy-load load, or may include both the light-load terminal and the heavy-load load.

Step 205, determining whether all the terminals are light-load terminals based on the proportions, performing step 206 if all the terminals are the light-load terminals, and performing step 209 if all the terminals are not all the light-load terminals.

Step 206, adopting an equal task assignment rule to assign a testing task in the testing task list to each terminal, and then performing step 207.

In this embodiment, the above equal task assignment rule includes: calculating the task quantity of testing tasks in the testing task list and the terminal quantity of all the terminals; assigning, when the task quantity is greater than the terminal quantity and a remainder of the task quantity and the terminal quantity is not zero, M testing tasks in the testing task list to each terminal in preceding terminals of a value of the remainder in all the terminals, and assigning N testing tasks in the testing task list to each terminal except the preceding terminals of the value of the remainder in all the terminals, wherein M is a number obtained by adding 1 to a quotient of the task quantity and the terminal quantity, and N is the quotient of the task quantity and the terminal quantity; and assigning, when the task quantity is less than or equal to the terminal quantity, one testing task in the testing task list to each terminal in preceding terminals of the task quantity in all the terminals.

Step 207, ending.

Step 208, adopting a real-time task assignment rule to assign a testing task in the testing task list to the each terminal, and then performing step 207.

In this embodiment, the real-time task assignment rule includes: assigning a testing task in the testing task list to each terminal in real time. According to the real-time task assignment rule, when a plurality of terminals in all the terminals are in an idle state, the testing tasks in the testing task list may be assigned to the plurality of terminals in sequence in real time. Further, the real-time task assignment rule may further include: first performing a first round of task assignment, in which the each terminal is assigned one testing task; and each time one terminal completes the execution on the testing task (the testing task is run by communicating the electronic device with the terminal, this running process is blocked, and the terminal returns a running result to the above electronic device after finishing the running of the testing task, and thus, it can be ascertained whether the terminal completes the execution), assigning, if there is still a to-be-run testing task in the testing task list at this point, one testing task to the terminal completing the task until all the testing tasks in the testing task list are all assigned.

Step 209, determining whether all the terminals are heavy-load terminals, and performing step 208 if all the terminals are the heavy-load terminals; and performing step 210 if all the terminals are not all the heavy-load terminals.

Step 210, adopting a balanced task assignment rule to assign a testing task in the testing task list to each terminal, and then performing step 207.

In this embodiment, the above balanced task assignment rule includes: assigning, when all the terminals include a light-load terminal and a heavy-load terminal, a part of testing tasks in the test task list to the light-load terminal in sequence until load information of the light-load terminal is identical to load information of the heavy-load terminal; and assigning, in response to ascertaining that there is a remaining testing task in the testing task list, the remaining testing task to all the terminals in real time.

In this embodiment, based on the load information of the terminals, three different task assignment rules (the balanced task assignment rule, the equal task assignment rule, and the real-time task assignment rule) are adopted to assign a testing task in the testing task list to the respective terminals, thereby ensuring the balance and rationality of the assignment of the testing task.

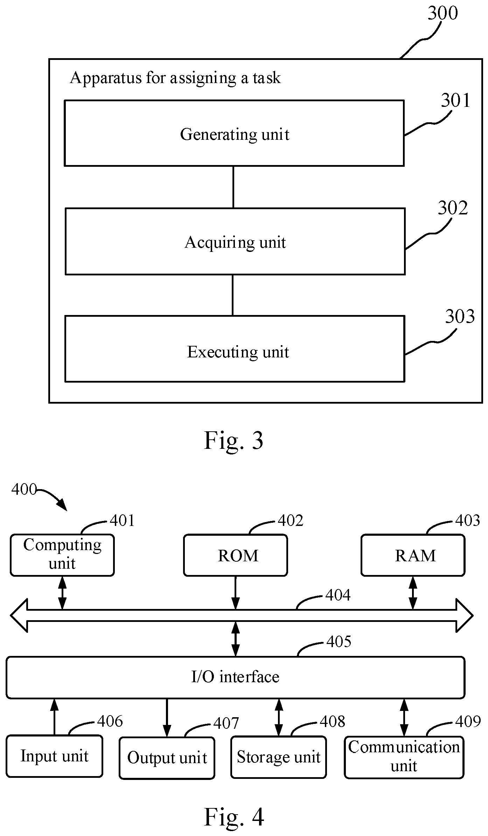

Further referring to Fig. 3, as an implementation of the method shown in the above drawings, an embodiment of the present disclosure provides an apparatus for assigning a task. The embodiment of the apparatus corresponds to the embodiment of the method shown in Fig. 1, and the apparatus may be applied in various electronic devices.

As shown in Fig. 3, an apparatus 300 for assigning a task provided in this embodiment includes: a generating unit 301, an acquiring unit 302 and an executing unit 303. Here, the generating unit 301 may be configured to generate a testing task list based on a received testing task request, the testing task list comprising at least one testing task. The executing unit 302 may be configured to acquire a currently assigned task of at least one terminal. The extracting unit 303 may be configured to adopt, in response to calculating load information of the currently assigned task executed by all terminals, a different task assignment rule based on the load information to assign a testing task in the testing task list to each terminal, the load information including an estimated time consumption and an amount of generated data of the currently assigned task executed by the respective terminals.

In this embodiment, for specific processes of the generating unit 301, the acquiring unit 302 and the executing unit 303 in the apparatus 300 for assigning a task, and their technical effects, reference may be respectively made to relative descriptions of step 101, step 102 and step 103 in the corresponding embodiment of Fig. 1, and thus, the details will not be repeatedly described here.

In some alternative implementations of this embodiment, the apparatus 300 further include: an assigning unit (not shown in the figure). Here, the assigning unit is configured to assign, in response to being unable to calculate the load information of the currently assigned task executed by all the terminals and the testing task in the testing task list being greater than a preset quantity, a testing task in the testing task list to each terminal in real time.

In some alternative implementations of this embodiment, the executing unit 303 includes: an ascertaining module (not shown in the figure), and an executing module (not shown in the figure). Here, the ascertaining module is configured to ascertain a light-load terminal and a heavy-load terminal in the at least one terminal based on the load information. The executing module is configured to adopt, based on proportions of the light-load terminal and the heavy-load terminal in all the terminals, a different task assignment rule to assign a testing task in the testing task list to each terminal.

In some alternative implementations of this embodiment, the executing module includes: a dual-terminal submodule (not shown in the figure) and a testing submodule (not shown in the figure). Here, the dual-terminal submodule is configured to assign, in response to the at least one terminal including a light-load terminal and a heavy-load terminal, a part of testing tasks in the test task list to the light-load terminal in sequence until load information of the light-load terminal is identical to load information of the heavy-load terminal. The testing submodule is configured to assign, in response to ascertaining that there is a remaining testing task in the testing task list, the remaining testing task to all the terminals in real time.

In some alternative implementations of this embodiment, the executing module includes: a light-terminal submodule (not shown in the figure) and a first assigning submodule (not shown in the figure). Here, the light-terminal submodule is configured to calculate, in response to ascertaining that all the terminals are light-load terminals, a task quantity of the testing tasks in the testing task list and a terminal quantity of all the terminals. The first assigning submodule is configured to assign, in response to the task quantity being greater than the terminal quantity and a remainder of the task quantity and the terminal quantity being not zero, M testing tasks in the testing task list to each terminal in preceding terminals of a value of the remainder in all the terminals, and assigning N testing tasks in the testing task list to each terminal except the preceding terminals of the value of the remainder in all the terminals, where M is a number obtained by adding 1 to a quotient of the task quantity and the terminal quantity, and N is the quotient of the task quantity and the terminal quantity.

In some alternative implementations of this embodiment, the executing module further includes: a second assigning submodule (not shown in the figure). Here, the second assigning submodule is configured to assign, in response to the task quantity being less than or equal to the terminal quantity, one testing task in the testing task list to each terminal in preceding terminals of the task quantity in all the terminals.

In some alternative implementations of this embodiment, the executing module includes: a heavy terminal submodule (not shown in the figure). Here, the heavy terminal submodule is configured to assign, in response to ascertaining that all the terminals are heavy-load terminals, a testing task in the testing task list to each terminal in real time.

According to the method and apparatus for assigning a task that are provided in the embodiments of the present disclosure, first, the generating unit 301 generates the testing task list based on the received testing task request, the testing task list including the at least one testing task. Then, the acquiring unit 302 acquires the currently assigned task of the at least one terminal. Finally, the executing unit 303 adopts, in response to calculating the load information of the currently assigned task executed by all the terminals, a different task assignment rule based on the load information to assign a testing task in the testing task list to each terminal. Accordingly, when the load information of the currently assigned task executed by all the terminals can be calculated, a testing task is assigned to the each terminal based on the different task assignment rule, which ensures the balance of load when the respective terminals in all the terminals execute the testing task, and improves the efficiency of the task assignment as compared with the manual assignment of the testing task.

In the technical solution of the present disclosure, the acquisition, storage, application, etc. of the personal information of a user all comply with the provisions of the relevant laws and regulations, and do not violate public order and good customs.

According to an embodiment of the present disclosure, an electronic device, a readable storage medium, and a computer program product are further provided.

Fig. 4 is a schematic block diagram of an exemplary electronic device 400 that may be used to implement the embodiments of the present disclosure. The electronic device is intended to represent various forms of digital computers such as a laptop computer, a desktop computer, a workstation, a personal digital assistant, a server, a blade server, a mainframe computer, and other appropriate computers. The electronic device may alternatively represent various forms of mobile apparatuses such as personal digital assistant, a cellular telephone, a smart phone, a wearable device and other similar computing apparatuses. The parts shown herein, their connections and relationships, and their functions are only as examples, and not intended to limit implementations of the present disclosure as described and/or claimed herein.

As shown in Fig. 4, the electronic device 400 includes a computing unit 401, which may execute various appropriate actions and processes in accordance with a computer program stored in a read-only memory (ROM) 402 or a computer program loaded into a random access memory (RAM) 403 from a storage unit 508. The RAM 403 also stores various programs and data required by operations of the device 400. The computing unit 401, the ROM 402 and the RAM 403 are connected to each other through a bus 404. An input/output (I/O) interface 405 is also connected to the bus 404.

The following components in the electronic device 400 are connected to the I/O interface 405: an input unit 406, for example, a keyboard and a mouse; an output unit 407, for example, various types of displays and a speaker; a storage unit 408, for example, a magnetic disk and an optical disk; and a communication unit 409, for example, a network card, a modem, a wireless communication transceiver. The communication unit 409 allows the device 400 to exchange information/data with an other device through a computer network such as the Internet and/or various telecommunication networks.

The computing unit 401 may be various general-purpose and/or special-purpose processing assemblies having processing and computing capabilities. Some examples of the computing unit 401 include, but not limited to, a central processing unit (CPU), a graphics processing unit (GPU), various dedicated artificial intelligence (AI) computing chips, various processors that run a machine learning model algorithm, a digital signal processor (DSP), any appropriate processor, controller and microcontroller, etc. The computing unit 401 performs the various methods and processes described above, for example, the method for assigning a task. For example, in some embodiments, the method for assigning a task may be implemented as a computer software program, which is tangibly included in a machine readable medium, for example, the storage unit 408. In some embodiments, part or all of the computer program may be loaded into and/or installed on the device 400 via the ROM 402 and/or the communication unit 409. When the computer program is loaded into the RAM 403 and executed by the computing unit 401, one or more steps of the above method for assigning a task may be performed. Alternatively, in other embodiments, the computing unit 401 may be configured to perform the method for assigning a task through any other appropriate approach (e.g., by means of firmware).

The various implementations of the systems and technologies described herein may be implemented in a digital electronic circuit system, an integrated circuit system, a field programmable gate array (FPGA), an application specific integrated circuit (ASIC), an application specific standard product (ASSP), a system-on-chip (SOC), a complex programmable logic device (CPLD), computer hardware, firmware, software and/or combinations thereof. The various implementations may include: being implemented in one or more computer programs, where the one or more computer programs may be executed and/or interpreted on a programmable system including at least one programmable processor, and the programmable processor may be a particular-purpose or general-purpose programmable processor, which may receive data and instructions from a storage system, at least one input device and at least one output device, and send the data and instructions to the storage system, the at least one input device and the at least one output device.

Program codes used to implement the method of embodiments of the present disclosure may be written in any combination of one or more programming languages. These program codes may be provided to a processor or controller of a general-purpose computer, particular-purpose computer or other programmable task assignment apparatus, so that the program codes, when executed by the processor or the controller, cause the functions or operations specified in the flowcharts and/or block diagrams to be implemented. These program codes may be executed entirely on a machine, partly on the machine, partly on the machine as a stand-alone software package and partly on a remote machine, or entirely on the remote machine or a server.

In the context of the present disclosure, the machine-readable medium may be a tangible medium that may include or store a program for use by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any appropriate combination thereof. A more particular example of the machine-readable storage medium may include an electronic connection based on one or more lines, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any appropriate combination thereof.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, including acoustic input, speech input or tactile input.

The systems and technologies described herein may be implemented in: a computing system including a background component (such as a data server), or a computing system including a middleware component (such as an application server), or a computing system including a front-end component (such as a user computer having a graphical user interface or a web browser through which the user may interact with the implementations of the systems and technologies described herein), or a computing system including any combination of such background component, middleware component or front-end component. The components of the systems may be interconnected by any form or medium of digital data communication (such as a communication network). Examples of the communication network include a local area network (LAN), a wide area network (WAN), and the Internet.

A computer system may include a client and a server. The client and the server are generally remote from each other, and generally interact with each other through the communication network. A relationship between the client and the server is generated by computer programs running on a corresponding computer and having a client-server relationship with each other. The server may be a cloud server, a distributed system server, or a server combined with a blockchain.

It should be appreciated that the steps of reordering, adding or deleting may be executed using the various forms shown above. For example, the steps described in embodiments of the present disclosure may be executed in parallel or sequentially or in a different order, so long as the expected results of the technical schemas provided in embodiments of the present disclosure may be realized, and no limitation is imposed herein.

The above particular implementations are not intended to limit the scope of the present disclosure. It should be appreciated by those skilled in the art that various modifications, combinations, sub-combinations, and substitutions may be made depending on design requirements and other factors. Any modification, equivalent and modification that fall within the spirit and principles of the present disclosure are intended to be included within the scope of the present disclosure.

## Claims

1. A method for assigning a task, comprising:
generating a testing task list based on a received testing task request, the testing task list comprising at least one testing task;
acquiring a currently assigned task of at least one terminal; and
adopting, in response to calculating load information of the currently assigned task executed by all terminals, a different task assignment rule based on the load information to assign a testing task in the testing task list to each terminal, the load information comprising an estimated time consumption and an amount of generated data of the currently assigned task executed by respective terminals.

2. The method according to claim 1, further comprising:
assigning, in response to being unable to calculate the load information of the currently assigned task executed by all the terminals and the testing task in the testing task list being greater than a preset quantity, a testing task in the testing task list to each terminal in real time.

3. The method according to claim 1 or 2, wherein adopting the different task assignment rule based on the load information to assign the testing task in the testing task list to each terminal comprises:
ascertaining a light-load terminal and a heavy-load terminal in the at least one terminal based on the load information; and
adopting, based on proportions of the light-load terminal and the heavy-load terminal in all the terminals, the different task assignment rule to assign the testing task in the testing task list to each terminal.

4. The method according to claim 3, wherein the adopting, based on proportions of the light-load terminal and the heavy-load terminal in all the terminals, the different task assignment rule to assign the testing task in the testing task list to each terminal comprises:
assigning, in response to the at least one terminal comprising a light-load terminal and a heavy-load terminal, a part of testing tasks in the test task list to the light-load terminal in sequence until load information of the light-load terminal is identical to load information of the heavy-load terminal; and
assigning, in response to ascertaining that there is a remaining testing task in the testing task list, the remaining testing task to all the terminals in real time.

5. The method according to claim 3, wherein the adopting, based on proportions of the light-load terminal and the heavy-load terminal in all the terminals, the different task assignment rule to assign the testing task in the testing task list to each terminal comprises:
calculating, in response to ascertaining that all the terminals are light-load terminals, a task quantity of the testing tasks in the testing task list and a terminal quantity of all the terminals; and
assigning, in response to the task quantity being greater than the terminal quantity and a remainder of the task quantity and the terminal quantity being not zero, M testing tasks in the testing task list to each terminal in preceding terminals of a value of the remainder in all the terminals, and assigning N testing tasks in the testing task list to each terminal except the preceding terminals of the value of the remainder in all the terminals, wherein M is a number obtained by adding 1 to a quotient of the task quantity and the terminal quantity, and N is the quotient of the task quantity and the terminal quantity.

6. The method according to claim 5, wherein the adopting, based on proportions of the light-load terminal and the heavy-load terminal in all the terminals, the different task assignment rule to assign the testing task in the testing task list to each terminal further comprises:
assigning, in response to the task quantity being less than or equal to the terminal quantity, one testing task in the testing task list to each terminal in preceding terminals of the task quantity in all the terminals.

7. The method according to claim 3, wherein the adopting, based on proportions of the light-load terminal and the heavy-load terminal in all the terminals, the different task assignment rule to assign the testing task in the testing task list to each terminal comprises:
assigning, in response to ascertaining that all the terminals are heavy-load terminals, a testing task in the testing task list to each terminal in real time.

8. An apparatus for assigning a task, comprising:
a generating unit, configured to generate a testing task list based on a received testing task request, the testing task list comprising at least one testing task;
an acquiring unit, configured to acquire a currently assigned task of at least one terminal; and
an executing unit, configured to adopt, in response to calculating load information of the currently assigned task executed by all terminals, a different task assignment rule based on the load information to assign a testing task in the testing task list to each terminal, the load information comprising an estimated time consumption and an amount of generated data of the currently assigned task executed by respective terminals.

9. The apparatus according to claim 8, further comprising:
an assigning unit, configured to assign, in response to being unable to calculate the load information of the currently assigned task executed by all the terminals and the testing task in the testing task list being greater than a preset quantity, a testing task in the testing task list to each terminal in real time.

10. The apparatus according to claim 8 or 9, wherein the executing unit comprises:
an ascertaining module, configured to ascertain a light-load terminal and a heavy-load terminal in the at least one terminal based on the load information; and
an executing module, configured to adopt, based on proportions of the light-load terminal and the heavy-load terminal in all the terminals, the different task assignment rule to assign the testing task in the testing task list to each terminal.

11. The apparatus according to claim 10, wherein the executing module comprises:
a dual-terminal submodule, configured to assign, in response to the at least one terminal comprising a light-load terminal and a heavy-load terminal, a part of testing tasks in the test task list to the light-load terminal in sequence until load information of the light-load terminal is identical to load information of the heavy-load terminal; and
a testing submodule, configured to assign, in response to ascertaining that there is a remaining testing task in the testing task list, the remaining testing task to all the terminals in real time.

12. The apparatus according to claim 10, wherein the executing module comprises:
a light-terminal submodule, configured to calculate, in response to ascertaining that all the terminals are light-load terminals, a task quantity of the testing tasks in the testing task list and a terminal quantity of all the terminals; and
a first assigning submodule, configured to assign, in response to the task quantity being greater than the terminal quantity and a remainder of the task quantity and the terminal quantity being not zero, M testing tasks in the testing task list to each terminal in preceding terminals of a value of the remainder in all the terminals, and assigning N testing tasks in the testing task list to each terminal except the preceding terminals of the value of the remainder in all the terminals, wherein M is a number obtained by adding 1 to a quotient of the task quantity and the terminal quantity, and N is the quotient of the task quantity and the terminal quantity.

13. The apparatus according to claim 12, wherein the executing module further comprises:
a second assigning submodule, configured to assign, in response to the task quantity being less than or equal to the terminal quantity, one testing task in the testing task list to each terminal in preceding terminals of the task quantity in all the terminals.

14. The apparatus according to claim 10, wherein the executing module comprises:
a heavy terminal submodule, configured to assign, in response to ascertaining that all the terminals are heavy-load terminals, a testing task in the testing task list to the each terminal in real time.

15. An electronic device, comprising:
at least one processor; and
a memory communicatively connected to the at least one processor,
wherein the memory stores instructions executable by the at least one processor, and the instructions are executed by the at least one processor, to enable the at least one processor to perform the method according to any one of claims 1-7.

16. A non-transitory computer readable storage medium, storing a computer instruction, wherein the computer instruction is used to cause a computer to perform the method according to any one of claims 1-7.

17. A computer program product, comprising a computer program, wherein the computer program, when executed by a processor, implements the method according to any one of claims 1-7.
